# EUROPÄISCHE PATENTSCHRIFT

(11) **EP 2 768 712 B1**
(45) Veröffentlichungstag und Bekanntmachung des Hinweises auf die Patenterteilung: **27.04.2016**
(21) Anmeldenummer: 12756115.7
(22) Anmeldetag: 05.09.2012
(51) Int. Cl.: B62D 1/184, B62D 1/16

(54) **LENKSPINDELLAGEREINHEIT ZUR DREHBAREN LAGERUNG EINER LENKSPINDEL**
STEERING SHAFT BEARING UNIT FOR ROTATABLY MOUNTING A STEERING SHAFT
UNITÉ PALIER D'ARBRE DE DIRECTION POUR LE LOGEMENT ROTATIF D'UN ARBRE DE DIRECTION

(30) Priorität: 19.10.2011 DE 102011054606
(43) Veröffentlichungstag der Anmeldung: 27.08.2014
(73) Patentinhaber: ThyssenKrupp Presta Aktiengesellschaft, 9492 Eschen (LI)
(72) Erfinder: SCHNITZER, Rony, 9487 Gamprin (LI)
(74) Vertreter: Fechner, Thomas
(86) Internationale Anmeldenummer: PCT/EP2012/003718
(87) Internationale Veröffentlichungsnummer: WO 2013/056764

(56) Entgegenhaltungen:
- WO-A2-01/81149
- GB-A- 2 431 980
- US-A1- 2007 069 513

## Beschreibung

Die vorliegende Erfindung betrifft eine Lenkspindellagereinheit zur drehbaren Lagerung einer Lenkspindel einer Lenksäule für ein Kraftfahrzeug, wobei die Lenkspindellagereinheit zumindest einen umfangsgeschlossenen Bereich zur Aufnahme zumindest eines Lagers zur drehbaren Lagerung der Lenkspindel und zumindest einen Befestigungsbereich zur Befestigung der Lenkspindellagereinheit an einem Konsolenteil der Lenksäule aufweist, wobei im Befestigungsbereich zumindest eine Durchführöffnung, zum Hindurchführen eines Spannbolzens der Lenksäule angeordnet ist bzw. sind, und die Lenkspindellagereinheit aus zumindest zwei Halbschalen, die jeweils zumindest einen Abschnitt des Befestigungsbereichs und zumindest einen Abschnitt des zumindest einen umfangsgeschlossenen Bereichs aufweisen, durch Zusammenfügen gebildet ist.

Weiters betrifft die Erfindung auch eine Lenksäule mit einer solchen Lenkspindellagereinheit sowie ein Verfahren zur Herstellung der Lenkspindellagereinheit.

Aus der EP 1 535 824 B1, der EP 1 547 902 A1, der EP 1 553 002 B1, der US 7,350,813 B2 und der JP 10-7003 sind Lenkspindellagereinheiten bekannt, welchen allen gemeinsam ist, dass die Lenkspindellagereinheit im Befestigungsbereich aufgeweitet wird, um geeignete Befestigungsflächen zur Befestigung der Lenkspindellagereinheit an einem Konsolenteil und damit an einer Karosserie eines Kraftfahrzeugs zur Verfügung zu stellen. Das Aufweiten des Mantelblechs im Befestigungsbereich hat zwei wesentliche Nachteile. Zum einen kommt es durch das Aufweiten zu einer Ausdünnung und damit zu einer Schwächung des Mantelblechs in diesem Bereich. Zum anderen ist der Vorgang der Aufweitung des Mantelblechs mit einem erhöhten technischen Aufwand verbunden.

Aus der GB 2 431 980 ist eine gattungsgemäße Lenkspindellagereinheit bekannt, die aus zwei Halbschalen besteht und einen umfangsgeschlossenen Bereich zur Aufnahme eines Lagers aufweist. Die Lenkspindellagereinheit ist Teil einer relativ komplexen Lenksäulenanordnung, die separate Lagerstellen für die drehbare Lagerung der Lenkspindel vorsieht. Dieser Aufbau ist aufgrund der vielen zu fertigenden Teile aufwändig und verursacht hohe Produktionskosten.

Aufgabe der Erfindung ist es, eine gattungsgemäße Lenkspindellagereinheit zur Verfügung zu stellen, die möglichst einfach und preiswert produziert werden kann, hohe Anforderungen an die Steifigkeit erfüllt und den Aufbau von Lenksäulen vereinfacht.

Dies wird erfindungsgemäß durch eine Lenkspindellagereinheit gemäß Patentanspruch 1 und ein Verfahren entsprechend Patentanspruch 9 erreicht.

Es ist somit mit anderen Worten vorgesehen, dass die Lenkspindellagereinheit zumindest zwei umfangsgeschlossene Bereiche zur Aufnahme jeweils zumindest eines Lagers zur drehbaren Lagerung der Lenkspindel aufweist und der Befestigungsbereich zwischen den umfangsgeschlossenen Bereichen angeordnet ist.

Besonders günstig herzustellende Varianten sehen dabei vor, dass es sich um genau zwei umfangsgeschlossene Bereiche zur Aufnahme jeweils zumindest eines Lagers handelt. Die umfangsgeschlossenen Bereiche der Lenkspindellagereinheit können rohrförmig ausgebildet sein.

Im Befestigungsbereich sind bevorzugt zwei Durchführöffnungen zum Hindurchführen eines Spannbolzens der Lenksäule angeordnet.

Ein Grundgedanke der Erfindung ist es somit, eine Lenkspindellagereinheit aus mehreren vorgefertigten Bauteilen zusammenzufügen, die jeweils in einfacher kostengünstiger Weise herstellbar sind. Dabei wird es möglich für die jeweiligen Bauteile ein optimiertes Fertigungsverfahren, wie Tiefziehen, Strangpressen, Gießen usw. einzusetzen und jeweils für die Anforderungen optimierte Werkstoffe einzusetzen, wobei die Lenkspindellagereinheit aus zumindest zwei Halbschalen gebildet wird, die in sich Abschnitte des umfangsgeschlossenen Bereichs zur Aufnahme der Lagerung der Lenkspindel und Abschnitte des Befestigungsbereichs zur Befestigung der Lenkspindellagereinheit an dem Fahrzeug aufweisen.

Durch die zunächst voneinander getrennte Anfertigung dieser Halbschalen ist es, möglich die Halbschalen schnell und kostengünstig herzustellen. Auch das miteinander Verbinden, insbesondere durch Verschweißen, ist einfach und kostengünstig durchführbar. Dadurch lässt sich die Lenkspindellagereinheit auf eine sehr wirtschaftliche Art und Weise herstellen. Außerdem ist es kein Problem bei dieser Vorgehensweise, die benötigten Anforderungen an die Steifigkeit zu erfüllen. Die einzelnen Halbschalen oder deren Teilhalbschalen bzw. Bestandteile, aus denen sie zusammengefügt sind, können, im Fall der Herstellung mittels Blechumformung, mit geringen Umformgraden geformt werden, so dass auch im Befestigungsbereich eine gute Festigkeit und geringe Wandstärkenreduktion erzielbar ist.

Vorzugsweise ist die Lenkspindellagereinheit aus genau zwei Halbschalen aufgebaut. Es kann sich aber zur Herstellung der Lenkspindellagereinheit aber auch um ein Zusammenfügen von mehr als zwei Halbschalen handeln. Der Begriff der Halbschale wird dabei beibehalten, könnte aber auch durch Teilschale ersetzt werden. Jede Halbschale bzw. Teilschale weist jedenfalls einen Abschnitt des Befestigungsbereichs und zumindest einen Abschnitt zumindest eines umfangsgeschlossenen Bereichs auf.

Besonders bevorzugte Ausgestaltungsformen der Erfindung sehen vor, dass die Halbschalen bzw. Teilschalen in einer Symmetrieebene, die durch eine Längsachse der Lenkspindellagereinheit verläuft, zusammengefügt, vorzugsweise zusammengeschweißt, sind.

Bei den Halbschalen bzw. Teilschalen kann es sich um tiefgezogene Blechhalbschalen handeln. Die Längsachse der Lenkspindellagereinheit fällt günstigerweise mit der Achse zusammen, um die die Lenkspindel drehbar in der Lenkspindellagereinheit lagerbar bzw. gelagert ist. Dies kann in unterschiedlichen Ausführungsformen so realisiert sein.

Weitere separate Bauteile, die beispielsweise für weitere Funktionen erforderlich sind, können mit der aus den Halbschalen bzw. Teilschalen gebildeten Lenkspindellagereinheit verbunden werden.

In einer bevorzugten Ausführungsform ist die Lenkspindellagereinheit im Befestigungsbereich zumindest bereichsweise umfangsgeschlossen ausgebildet. Dabei ist es besonders zu bevorzugen, die Lenkspindellagereinheit überall einwandig auszubilden. Dies ist mit der Halbschalentechnologie besonders einfach und vorteilhaft darzustellen.

Bevorzugt ist vorgesehen, dass der Befestigungsbereich zumindest zwei voneinander beabstandete Befestigungsstege mit jeweils einem Endbereich aufweist, wobei in den Endbereichen der Befestigungsstege jeweils eine der Durchführöffnungen angeordnet ist und die Endbereiche mittels eines Verbindungsabschnitts miteinander verbunden sind. Besonders günstig ist es dabei, wenn der Verbindungsabschnitt einen v-förmigen Querschnitt aufweist.

Der Umbiegebereich des v-förmigen Querschnitts des Verbindungsabschnitts verläuft günstigerweise parallel zu einer Längsachse der Lenkspindel. Besonders günstig ist es, wenn dieser Umbiegebereich bzw. die Spitze der v-Form des gesonderten Verbindungsbleches längserstreckt ist. Sie kann mit ihrer Längserstreckung in einer Symmetrieebene des Befestigungsbereichs, insbesondere entlang einer Verbindungslinie entlang der die Halbschalen bzw. Teilschalen miteinander verbunden sind, verlaufen.

Ein bevorzugtes Verfahren zur Herstellung einer erfindungsgemäßen Lenkspindellagereinheit sieht vor, dass in einem ersten Verfahrensschritt zumindest zwei, vorzugsweise genau zwei, Halbschalen bzw. Teilschalen, die jeweils zumindest einen Abschnitt des Befestigungsbereichs und jeweils zumindest einen Abschnitt des zumindest einen umfangsgeschlossenen Bereichs aufweisen, gefertigt werden und diese Halbschalen bzw. Teilschalen in einem folgenden Verfahrensschritt zur Bildung der Lenkspindellagereinheit miteinander, vorzugsweise direkt, verbunden, vorzugsweise verschweißt, werden.

Zur Erhöhung der Steifigkeit der Lenkspindellagereinheit, insbesondere im Bereich der Befestigungsstege, kann vorgesehen sein, dass in der Lenkspindellagereinheit zumindest eine Lenkspindellagereinheitsicke angeordnet ist. Die, vorzugsweise jede, Durchführöffnung kann, vorzugsweise jeweils, in einer Lenkspindellagereinheitsicke angeordnet sein. Besonders bevorzugte Ausgestaltungsformen der Erfindung sehen in diesem Zusammenhang vor, dass die Lenkspindellagereinheit genau zwei Lenkspindellagereinheitsicken aufweist und in jeder Lenkspindellagereinheitsicke eine Durchführöffnung zum Hindurchführen eines an sich bekannten Spannbolzens angeordnet ist. Günstigerweise weist jeder Befestigungssteg genau eine Lenkspindellagereinheitsicke auf, in der jeweils eine Durchführöffnung angeordnet ist. Die Lenkspindellagereinheitsicken sind günstigerweise in der Nähe von Endbereichen der Befestigungsstege angeordnet. Bevorzugt handelt es sich bei den Durchführöffnungen um Langlöcher. Es ist weiters von Vorteil, wenn die Durchführöffnung jeweils im Sickengrund der Lenkspindellagereinheitsicke angeordnet ist. Besonders vorteilhaft ist es, wenn die Durchführöffnung etwa symmetrisch zwischen den den Sickengrund begrenzenden etwa parallel verlaufenden Seitenwänden oder Rändern im Sickengrund angeordnet ist.

Bei den Lenkspindellagereinheitsicken handelt es sich günstigerweise um sogenannte Innensicken. Diese sind dadurch gekennzeichnet, dass die Lenkspindellagereinheitsicke bzw. die Lenkspindellagereinheitsicken als in Richtung in einen Innenraum des Befestigungsbereiches hinein vertiefte Sicke bzw. Sicken ausgebildet ist bzw. sind.

Bei bevorzugten Ausgestaltungsformen der Erfindung ist vorgesehen, dass die Lenkspindellagereinheit im Befestigungsbereich und/oder im umfangsgeschlossenen Bereich zur Aufnahme zumindest eines Lagers und/oder überall einwandig ausgebildet ist. Dies gilt insbesondere für den Befestigungsbereich aber bevorzugt auch für den umfangsgeschlossenen Bereich zur Aufnahme zumindest eines Lagers zur drehbaren Lagerung der Lenkspindel.

Günstigerweise besteht die Lenkspindellagereinheit aus Metall, vorzugsweise aus Metallblechen. Bevorzugt handelt es sich um Stahl, Aluminium, Magnesium oder Legierungen, die diese Metalle enthalten. Es können aber auch Verbundwerkstoffe, z.B. Kohlenstofffaser-Verbundwerkstoffe, oder Gussteile oder ein Mix aus den genannten Werkstoffen zum Einsatz kommen.

Neben der Lenkspindellagereinheit an sich betrifft die Erfindung auch eine Lenksäule für ein Kraftfahrzeug mit einem, zur Befestigung der Lenksäule an einer Karosserie des Kraftfahrzeugs vorgesehenen Konsolenteil, welches zumindest zwei Seitenwangen aufweist, wobei eine erfindungsgemäße Lenkspindellagereinheit mit ihrem Befestigungsbereich zwischen den Seitenwangen angeordnet und mittels der Befestigungsstege an den Seitenwangen gehalten ist.

Bei erfindungsgemäßen Lenksäulen handelt es sich günstigerweise um sogenannte verstellbare Lenksäulen. Diese sind, wie an sich bekannt, dadurch gekennzeichnet, dass die Lenkspindel samt Lenkspindellagereinheit gegenüber dem Konsolenteil in ihrer Position verstellbar ist. Hierdurch kann die Position des Lenkrades an den jeweiligen Fahrer des Fahrzeugs angepasst werden. Besonders bevorzugte Ausgestaltungsformen erfindungsgemäßer Lenksäulen sehen vor, dass die Lenkspindel in ihrer Längsrichtung und/oder in einer zur Längsrichtung orthogonalen Höhenrichtung verstellbar ist.

Bevorzugte Ausgestaltungsformen solcher Lenksäulen sehen vor, dass zwischen zumindest, vorzugsweise genau, zwei Seitenwangen des zur Befestigung der Lenksäule an einer Karosserie des Kraftfahrzeugs vorgesehenen Konsolenteils die Lenkspindellagereinheit zur drehbaren Lagerung der Lenkspindel der Lenksäule gelagert ist. Zwischen den Seitenwangen des Konsolenteils und der Lenkspindellagereinheit ist bei bevorzugten Ausgestaltungsformen ein Lagerteil angeordnet. Ein Spannbolzen der Lenksäule kann die Seitenwangen des Konsolenteils und das Lagerteil und die Lenkspindellagereinheit durchdringen. Das Lagerteil kann dabei zumindest eine Lagerteilsicke und die Lenkspindellagereinheit zumindest eine Lenkspindellagereinheitsicke aufweisen, wobei die Lagerteilsicke zumindest bereichsweise flächig an der Lenkspindellagereinheitsicke anliegt. Bei solchen Ausgestaltungsformen ist besonders bevorzugt vorgesehen, dass der Spannbolzen das Lagerteil in der Lagerteilsicke und die Lenkspindellagereinheit in der Lenkspindellagereinheitsicke durchdringt.

Die erfindungsgemäße Lenksäule kann mit Vorteil in ihrer Höhe, gleichbedeutend mit ihrer Neigung, und/oder in ihrer Länge einstellbar ausgebildet sein. Bevorzugt sind allgemein kostengünstige höhen- und längenverstellbare Lenksäulen, die eine Feststelleinrichtung umfassen, das die wahlweise Freigabe (= geöffneter Zustand der Feststelleinrichtung) oder Fixierung (=geschlossener Zustand der Feststelleinrichtung) der jeweiligen Verstellungsrichtung ermöglicht. Der Spannbolzen, als Teil einer derartigen Feststelleinrichtung, im Verbund mit weiteren Spannteilen, wie beispielsweise einem Klemmstück, einer Nockenplatte, einer Spannmutter, kann dabei in einfacher Weise zur wahlweisen Freigabe oder Fixierung der je nach Ausführung möglichen Verstellung in Längsrichtungen und/oder Höhenrichtung in bekannter Weise dienen. Unabhängig von einer formschlüssigen oder kraftschlüssigen (auch reibschlüssigen) Fixierung, ist es stets günstig, wenn hohe Presskräfte im geschlossenen Zustand der Feststelleinrichtung auf die Verbindungen zwischen Lenkspindellagereinheit und Lagerteil einerseits und Lagerteil und Konsolenteil andererseits aufgebracht sind.

Durch das Durchdringen von Lenkspindellagereinheitsicke und Lagerteilsicke mittels des Spannbolzens werden die vom Spannbolzen ausgeübten Klemmkräfte direkt auf die beiden genannten Sicken übertragen, sodass mit einer einfachen Konstruktion große Kräfte übertragen werden können. Dies hilft auch, die Anzahl der Bauteile zu verringern. Im geöffneten Zustand, in dem über den Spannbolzen keine oder nur geringfügige Klemmkräfte übertragen werden, wird ebenfalls eine hohe Führungsgenauigkeit bei der Verstellung erreicht. Die Steifigkeit kann dabei weiter erhöht werden, wenn das Lagerteil und die Lenkspindellagereinheit, an den parallel zu den beiden Seitenwangen ausgerichteten Oberflächen, beidseits der Lenkspindel jeweils korrespondierend eine Lenkspindellagereinheitsicke und eine Lagerteilsicke aufweisen, die von einem Spannbolzen durchsetzt sind. Dies hilft auch, die Anzahl der Bauteile und/oder den Materialeinsatz zur Darstellung der Lenksäule zu verringern. Im geöffneten Zustand, in dem über den Spannbolzen keine oder nur geringfügige Klemmkräfte übertragen werden, wird durch die erfindungsgemäße Anordnung ohne großen Aufwand ein spielarmes Führungssystem erreicht. Dem Lenker des Kraftfahrzeuges wird somit auch in diesem Zustand ein stabiles und sattes Gefühl beim Anfassen des an der Lenkspindel der Lenksäule befestigten Lenkrades gegeben. Die Lagerteilsicke und die Lenkspindellagereinheitsicke sowie eine weiter unten noch genannte, gegebenenfalls auch vorhandene Konsolenteilsicke werden günstigerweise zueinander korrespondierend ausgebildet. In diesem Sinne ist bevorzugt auch vorgesehen, dass die Lagerteilsicke in einer Schnittebene durch eine Längsmittelachse des Spannbolzens gesehen, geometrisch ähnlich zur Lenkspindellagereinheitsicke ausgebildet ist. Das gleiche gilt günstigerweise auch, soweit vorhanden, für eine Konsolenteilsicke. Weiters ist es auch günstig, wenn die Lagerteilsicke und/oder die Lenkspindellagereinheitsicke und/oder die gegebenenfalls vorhandene Konsolenteilsicke in sich achsensymmetrisch bezüglich einer Längsmittelachse des Spannbolzens ausgebildet ist bzw. sind.

Günstig ist es, wenn die genannten Sicken jeweils mit ihren Seitenwänden, vorzugsweise paarweise, aneinander anliegen. Um in Achsrichtung aber besonders hohe Klemmkräfte übertragen zu können, sehen bevorzugte Ausgestaltungsformen der Erfindung vor, dass die Lagerteilsicke und die Lenkspindellagereinheitsicke und soweit vorhanden auch die Konsolenteilsicke jeweils Seitenwände und jeweils einen die Seitenwände miteinander verbindenden Sickengrund aufweisen. Besonders vorteilhaft ist die Ausbildung von Seitenwänden in den jeweiligen Sicken, die im Bereich von 30° bis 60°, bevorzugt 45° bis 60° geneigt sind, gegenüber dem Sickengrund. Im geschlossenen Zustand der Feststelleinrichtung liegen die Lagerteilsicke und die Lenkspindellagereinheitsicke mit ihren jeweiligen Seitenwänden, vorzugsweise paarweise, mit Vorspannung aneinander an. Der Spannbolzen ist günstigerweise jeweils durch eine Öffnung im jeweiligen Sickengrund hindurchgeführt.

Die Ausbildung des Sickengrundes, sowohl in der Lagerteilsicke als auch in der Lenkspindellagereinheitsicke, die parallel, oder zumindest nahezu parallel, zueinander ausgerichtet sind, ermöglicht den Ausgleich von Toleranzen bei gleichzeitiger Erhöhung der Kontaktspannung im Kontakt zwischen den Seitenwänden der beiden Sicken. In diesem Fall berühren sich die beiden Sickengründe im geschlossenen Zustand der Feststelleinrichtung nicht. Alternativ ist es jedoch denkbar und möglich unter Einschränkung der Toleranz, diesen Kontakt zwischen den jeweiligen Sickengründen gerade vorzusehen, wobei ebenfalls auf den Kontakt zwischen den Seitenwänden eine erhebliche Presskraftsteigerung ermöglicht wird.

Wie bereits angesprochen, sehen Ausgestaltungsformen der Erfindung vor, dass die Seitenwangen des Konsolenteils jeweils zumindest eine Konsolenteilsicke aufweisen und der Spannbolzen die Seitenwangen in der Konsolenteilsicke durchdringt und die Konsolenteilsicke, vorzugsweise auf zwei einander gegenüberliegenden Seiten des Spannbolzens, zumindest bereichsweise flächig an der Lagerteilsicke anliegt.

Durch das Hindurchführen des Spannbolzens durch die Lagerteilsicke, die Lenkspindellagereinheitsicke und gegebenenfalls auch die Konsolenteilsicke kann eine äußerst kompakte Bauweise erreicht werden. Der Spannbolzen kann sehr nah an der, in der Lenkspindellagereinheit drehbar gelagerten Lenkspindel angeordnet werden. Dies führt zu einer gleichermaßen kompakten wie auch stabilen Bauweise. Außerdem wirken die über den Spannbolzen übertragenen Kräfte sehr unmittelbar auf die genannten Sicken ein.

Günstigerweise ist vorgesehen, dass der Bolzen die Lagerteilsicke und die Lenkspindellagereinheitsicke sowie die gegebenenfalls vorhandene Konsolenteilsicke mittig durchdringt, was für eine symmetrische, auf alle Seitenwände der jeweiligen Sicken verteilte Krafteinleitung weiters günstig ist. Der Sickengrund ist günstigerweise so breit ausgeführt, dass der Spannbolzen vollständig durch eine Öffnung im Sickengrund hindurchgeführt werden kann. Weiters kann der Sickengrund seitlich zu den genannten Öffnungen auch noch Bereiche aufweisen, mit denen er an den Sickengründen der anderen Sicken abgestützt ist. Die genannten Öffnungen bzw.

Aussparungen in den Sicken bzw. Sickengründen, durch die der Spannbolzen durchgeführt ist, sollten günstigerweise größer als der Durchmesser des Spannbolzens sein, sodass der Spannbolzen nicht direkt an den Rändern der genannten Öffnungen bzw. Aussparungen anliegt. Dies hat beispielsweise den Vorteil, dass im Falle eines Fahrzeugcrash keine Rotationsbewegung des Spannbolzens ausgelöst wird. Weiters wird der Verschleiß in den Langlöchern reduziert.

Der Vollständigkeit halber wird darauf hingewiesen, dass es sich bei der Lenkspindellagereinheitsicke um eine Sicke in der Lenkspindellagereinheit, bei der Lagerteilsicke entsprechend um eine Sicke im Lagerteil und bei der Konsolenteilsicke wiederum entsprechend um eine Sicke in dem Konsolenteil handelt. Eine Sicke ist, wie allgemein bekannt, eine rinnenförmige Vertiefung bzw. Kehlung. Geometrisch ähnlich sind zwei Sicken, wenn sie sich durch eine Ähnlichkeitsabbildung, d.h. eine geometrische Abbildung die sich aus zentrischen Streckungen und Kongruenzabbildung wie Verschiebung, Drehung, Spiegelung zusammensetzen lässt, in einander übergeführt werden können.

Im Sinne der Erfindung ist es denkbar und möglich, die Sicken als sogenannte Innensicken oder auch als Außensicken auszubilden. Bevorzugt sind die genannten Sicken als sogenannte Innensicken ausgebildet, da in diesem Fall eine einfachere Konstruktion zu einer entsprechend stabilen Lenksäule führt. Als Innensicke ist im Sinne der Erfindung besonders bevorzugt eine Sicke zu verstehen, deren Boden etwa senkrecht zur Ebene der Seitenwangen in Richtung zur Lenkspindel hin vertieft ist, wobei der Boden im Wesentlichen parallel zur Ebene der Seitenwangen verläuft. Hierdurch wird eine kompakte Bauweise erreicht. Zusätzlich können auch hohe Kräfte übertragen werden. In diesem Sinne ist es somit günstig, wenn die Lagerteilsicke und die Lenkspindellagereinheitsicke und soweit vorhanden auch die Konsolenteilsicke als in Richtung in den Bereich zwischen den Seitenwangen des Konsolenteils hinein vertiefte Sicken ausgebildet sind. Im Sinne einer günstigen und möglichst effektiven Kraftübertragung sehen bevorzugte Varianten weiters vor, dass die Lagerteilsicke auf zwei einander gegenüberliegenden Seiten des Spannbolzens zumindest bereichsweise flächig, oder alternativ zumindest bereichsweise linienförmig, an der Lenkspindellagereinheitsicke anliegt. Im Sinne einer spielarmen Führung und der Möglichkeit auch im Crashfall hohe Kräfte aufnehmen zu können, sehen besonders bevorzugte Ausgestaltungsformen der Erfindung vor, dass die Lagerteilsicke und/oder die Lenkspindeilagereinheitsicke und/oder die gegebenenfalls vorhandene Konsolenteilsicke längserstreckt ausgebildet ist bzw. sind. Hierdurch wird eine besonders große Führungslänge und damit eine ideale Kraftabstützung bei Drehmomentbelastung wie z.B. im Crashfall geschaffen.

Besonders bevorzugte Ausgestaltungsformen der Erfindung sehen vor, dass das Lagerteil einstückig z.B. aus einem gebogenen, vorzugsweise U-förmig gebogenen, Blechstreifen gebildet ist. Im Sinne einer stabilen Lagerung weist das Lagerteil zumindest zwei voneinander entfernte Befestigungsstellen auf, an denen es direkt oder indirekt an der Karosserie des Kraftfahrzeugs befestigt werden kann. In diesem Sinne sieht eine bevorzugte Ausgestaltungsform der Erfindung vor, dass das Lagerteil an zumindest einem, vom Spannbolzen distanzierten Ort eine fixe oder ein Schwenkgelenk bildende Lagerteilbefestigung zur Befestigung des Lagerteils an der Karosserie des Fahrzeugs oder am Konsolenteil aufweist. Die Lagerteilbefestigung kann dabei verstärkt bzw. versteift ausgeführt sein. Im Sinne einer möglichst stabilen, spielarmen Lagerung ist es günstig, wenn die Entfernung zwischen Spannbolzen und Lagerteilbefestigung zumindest der halben, vorzugsweise zumindest dreiviertel der, Länge des Lagerteils entspricht.

Bevorzugte Varianten der Erfindung sind, wie bereits erwähnt, als sogenannte verstellbare Lenksäule ausgeführt. So kann vorgesehen sein, dass das Lagerteil zur Bereitstellung einer Höhenverstellbarkeit der Lenksäule schwenkbar gelagert ist. Weiters kann vorgesehen sein, dass die Lenkspindellagereinheit zur Bereitstellung einer Längsverstellbarkeit der Lenksäule in Längsrichtung der Lenkspindel verschiebbar im Lagerteil gelagert ist. Besonders bevorzugte Ausgestaltungsformen von erfindungsgemäßen Lenksäulen sind sowohl höhenverstellbar als auch längsverstellbar. Sie weisen somit eine Kombination der zuletzt genannten Merkmale auf. Der Vollständigkeit halber wird aber darauf hingewiesen, dass es sich bei erfindungsgemäßen Lenksäulen auch um sogenannte starre Lenksäulen handeln kann, welche keine der genannten Verstellmöglichkeiten aufweisen.

Es ist auch zu berücksichtigen, dass die bezüglich der Sicken genannten Merkmale der Lenksäule nicht nur dazu eingesetzt werden können, um eine möglichst spielarm verstellbare Lenksäule zu schaffen. Vielmehr kann das Durchdringen der genannten Sicken durch den Spannbolzen auch dazu genutzt werden, eine Energieabsorptionseinrichtung für die genannte starre oder aber auch verstellbare Lenksäule zu schaffen, indem die genannten Sicken als an sich bekannte, sich im Crashfall umformende Crashsicken ausgeführt sind. Durch die Ausgestaltung der Sicken kann im Crashfall zum Energieabbau ein Durchrutschen über die Sickenführung ermöglicht werden. Bei verstellbaren Lenksäulen, bei denen die genannten Sicken zusätzlich auch als Crashsicken ausgebildet sind, befinden sich die für die Energieumwandlung im Falle eines Crashs relevanten Bereiche der Sicken günstigerweise am Ende der Verstellwege für die Lenksäulenverstellung.

Es ist auch denkbar und möglich, die Lenkspindellagereinheit aus zwei oder mehreren Bauteilen zu fertigen, wobei die Lenkspindellagereinheit durch Zusammenfügen der Bauteile entlang einer Längsachse, entlang der die Lenkspindel drehbar lagerbar ist, gebildet ist und, wobei jedes der Bauteile in einer Halbschalentechnologie, wie sie oben beschrieben ist, dargestellt ist. Insbesondere kann die Lenkspindellagereinheit durch Längsabschnitte gebildet sein, die nach den oben beschriebenen Merkmalen ausgebildet sind und die entlang einer Längsachse, um die die Lenkspindel drehbar lagerbar ist, zueinander ausgerichtet angeordnet sind. Die Längsabschnitte bzw. Teilhalbschalen sind entsprechend miteinander verbunden. Auch hier kann die Verbindung der Längsabschnitte bzw. Teilhalbschalen durch Schweißen erfolgen.

Es kann auch vorgesehen sein, dass zumindest eine der, vorzugweise die, Halbschalen bzw. Teilschalen, in einer Längsrichtung entlang einer Längsachse der Lenkspindellagereinheit gesehen, durch Zusammenfügen, vorzugsweise Zusammenschweißen, von zumindest zwei Teilhalbschalen, mehrteilig aufgebaut ist bzw. sind. Weitere Merkmale und Einzelheiten bevorzugter Ausgestaltungsformen der Erfindung werden anhand der nachfolgenden Figurenbeschreibung dargelegt. Es zeigen:
Fig. 1 und 2 ein erstes erfindungsgemäßes Ausführungsbeispiel in Form einer längenverstellbaren Lenksäule;
Fig. 3 und 4 eine zweite erfindungsgemäß ausgebildete Lenksäule, welche höhen- und längenverstellbar ist;
Fig. 5 eine Abwandlungsform des zweiten erfindungsgemäßen Ausführungsbeispiel;
Fig. 6 den Bereich A aus Fig. 2;
Fig. 7 den Bereich B aus Fig. 4;
Fig. 8 ein Beispiel, wie eine Halbschale bzw. Teilschale einstückig ausgebildet sein kann;
Fig. 9 Darstellungen einer erfindungsgemäßen Lenkspindellagereinheit in einer Ansicht von vorne;
Fig. 10 Darstellungen einer erfindungsgemäßen Lenkspindel;
Fig. 11 Darstellung einer weiteren Ausführungsform der erfindungsgemäßen Lenkspindellagereinheit in einer isometrischen Ansicht und
Fig. 12 und 13 ein Ausführungsbeispiel mit drei Halbschalen bzw. Teilschalen.

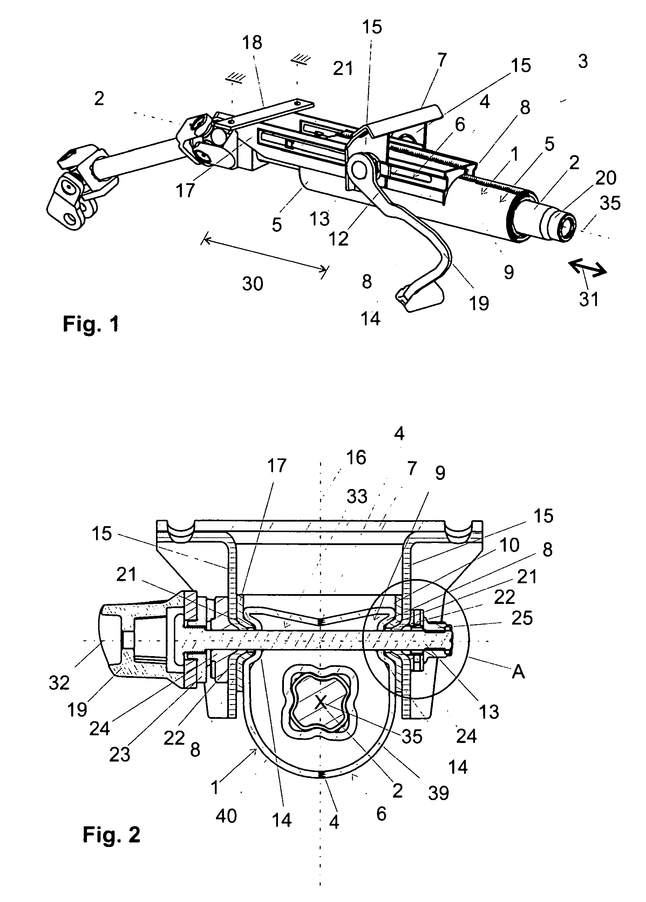

In Fig. 1 ist eine erste Lenksäule 3 mit einer erfindungsgemäßen Lenkspindellagereinheit 1 dargestellt. Mittels des Konsolenteils 7 kann diese an einer Karosserie eines hier nicht dargestellten Fahrzeugs befestigt werden. Fig. 2 zeigt einen Vertikalschnitt durch diese Lenksäule 3 entlang des Spannbolzens 13. Insbesondere in Fig. 2 ist gut zu sehen, dass das Konsolenteil 7 zwei Seitenwangen 15 aufweist, zwischen denen die Lenkspindellagereinheit 1 gehalten ist. In der Lenkspindellagereinheit 1 ist die Lenkspindel 2 um ihre Längsachse 35 drehbar gelagert. Der Lenkradanschluss 20 der Lenkspindel 2 ist zur Befestigung eines hier nicht dargestellten Lenkrades an der Lenkspindel 2 vorgesehen. Zwischen den Seitenwangen 15 und der Lenkspindellagereinheit 1 befindet sich das Lagerteil 17. Am vom Spannbolzen 13 abgewandten Ende ist das Lagerteil 17 mittels der Lagerteilbefestigung 18, im gezeigten Ausführungsbeispiel an der hier nicht dargestellten Karosserie des Kraftfahrzeugs befestigbar. Es sind auch Ausgestaltungsformen denkbar, bei denen die Lagerteilbefestigung 18 an dem Konsolenteil 7 befestigt wird. Im ersten Ausführungsbeispiel ist die Lagerteilbefestigung 18 jedenfalls starr ausgeführt. Die Länge des Lagerteils 17 ist in der Zeichnung mit dem Bezugszeichen 30 versehen. Wie bereits eingangs erläutert, ist es günstig, wenn die Lagerteilbefestigung 18 möglichst weit von dem Spannbolzen 13 entfernt ist. Hierzu sollte, wie bereits ausgeführt, die Entfernung zwischen Spannbolzen 13 und Lagerteilbefestigung 18 zumindest die Hälfte, vorzugsweise zumindest Dreiviertel, der Länge 30 des Lagerteils 17 betragen. Im Fügebereich 4 sind die beiden Halbschalen bzw. Teilschalen 39, 40, aus denen die Lenkspindellagereinheit gebildet ist, miteinander verbunden, beispielsweise durch Laserschweißen. In den gezeigten Ausführungsbeispielen verläuft der Fügebereich 4 innerhalb der Symmetrieebene 16, die etwa parallel zu den Befestigungsstegen 8 verläuft und die Längsachse 35 um die die Lenkspindel 2 drehbar gelagert ist, schneidet. Es ist denkbar und möglich, den Fügebereich 4 an anderen Umfangsbereichen der Lenkspindellagereinheit 1 auszubilden. Dies kann sinnvoll sein, um die beiden Halbschalen bzw. Teilschalen 39, 40 fertigungstechnisch günstiger ausbilden zu können.

Beim gezeigten Ausführungsbeispiel gemäß der Fig. 1 und 2 handelt es sich um eine längenverstellbare Lenksäule 3. Die Verstellrichtungen sind mit dem Doppelpfeil 31 gekennzeichnet. Dies entspricht den Längsrichtungen der Lenkspindel 2.

Um einerseits die Verstellung in Längsrichtungen 31 zuzulassen, andererseits während des Betriebes aber eine ausreichend feste Befestigung der Lenkspindellagereinheit 1 an dem Konsolenteil 7 zu gewährleisten, ist bei dieser Lenksäule, wie an sich bekannt, eine Feststelleinrichtung vorgesehen, welche unter anderem den Spannbolzen 13 und den Betätigungshebel 19 umfasst. Natürlich sind auch motorische Betätigungen der Feststelleinrichtung denkbar. In solchen Fällen kann dann auf den Betätigungshebel 19 verzichtet werden. Feststelleinrichtungen mit Spannbolzen 13 für verstellbare Lenksäulen 3 sind beim Stand der Technik in einer Vielzahl von Ausgestaltungsformen bekannt. Die hier gezeigten Ausführungsbeispiele dienen lediglich als Veranschaulichung einer von vielen verschiedenen möglichen Varianten, wie das Spannen und Entspannen der Feststelleinrichtung von statten gehen kann.

Im gezeigten Ausführungsbeispiel ist eine Nockenplatte 23 drehfest mit dem Betätigungshebel 19 verbunden. Die Nocken dieser Nockenplatte 23 wirken mit entsprechenden Gegennocken des Klemmstücks 24 zusammen. Das Klemmstück 24 ist drehfest mit dem Konsolenteil 7 verbunden. Auf der gegenüberliegenden Seite ist der Spannbolzen 13 mit einer Spannmutter 25 fixiert. Auch dort befindet sich ein Klemmstück 24 oder ein Axiallager, welches zwischen Spannmutter 25 und der entsprechenden Seitenwange 15 des Konsolenteils 7 angeordnet ist. Durch Drehen des Betätigungshebels 19 um die Mittenlängsachse 32 des Spannbolzens 13 wird die Nockenplatte 23 gegen das dazu benachbart angeordnete Klemmstück 24 verdreht. Je nach Stellung der beteiligten Nocken zueinander befindet sich dann die Feststelleinrichtung im geschlossenen Zustand, in dem die Lenkspindellagereinheit 1 zumindest bei den im normalen Betrieb auftretenden Kräften am Konsolenteil 7 fixiert ist. Durch entsprechendes Drehen des Betätigungshebels 19 kann dann die Feststelleinrichtung in den geöffneten Zustand gebracht werden, in dem ein Verstellen in Längsrichtungen 31 der Lenkspindellagereinheit 1 relativ zum Konsolenteil 7 und damit eine Einstellung der Position des Lenkrades möglich ist. Solche Feststelleinrichtungen sind an sich bekannt und müssen hier nicht weiter erläutert werden.

Wie insbesondere in der Schnittdarstellung gemäß Fig. 2 gut zu sehen ist, weisen sowohl das Lagerteil 17 als auch die Lenkspindellagereinheit 1 jeweils Sicken auf, mit denen sie ineinander gelagert sind. Konkret ist im ersten Ausführungsbeispiel vorgesehen, dass die jeweilige Lagerteilsicke 21 in einer der Lenkspindellagereinheitsicken 14 geführt ist. Im gezeigten ersten Ausführungsbeispiel gemäß der Fig.1 und 2 weist zusätzlich auch das Konsolenteil 7 bei beiden Seitenwangen 15 jeweils eine Konsolenteilsicke 22 auf, welche im gezeigten Ausführungsbeispiel in jeweils eine der Lagerteilsicken 21 eingreift. Der Spannbolzen 13 ist durch die Lagerteilsicken 21 und die Lenkspindellagereinheitsicken 14 hindurchgeführt. Im gezeigten Ausführungsbeispiel ist er zusätzlich auch noch durch die Konsolenteilsicken 22 hindurchgeführt. Es ist denkbar und möglich, auch bei Lenksäulen 3, die nur in ihrer Länge verstellbar sind, auf eine Konsolenteilsicke 22 zu verzichten. Die Seitenwangen 15 sind dann im Bereich der Klemmung und Verstellung bevorzugt plan ausgebildet, zumindest in der zur Lenkspindellagereinheit gerichteten Oberfläche.

Wie besonders gut in Fig. 2 zu sehen, ist es günstig, wenn, wie in diesem Ausführungsbeispiel auch realisiert, die genannten Sicken als sogenannte Innensicken ausgeführt sind. Dies ist der Fall, wenn sie in Richtung in den Bereich 33 zwischen den Seitenwangen 15 des Konsolenteils 7 bzw. in Richtung in den, den Bereich 33 bildenden Innenraum des Befestigungsbereichs 6 hinein vertieft ausgebildet sind.

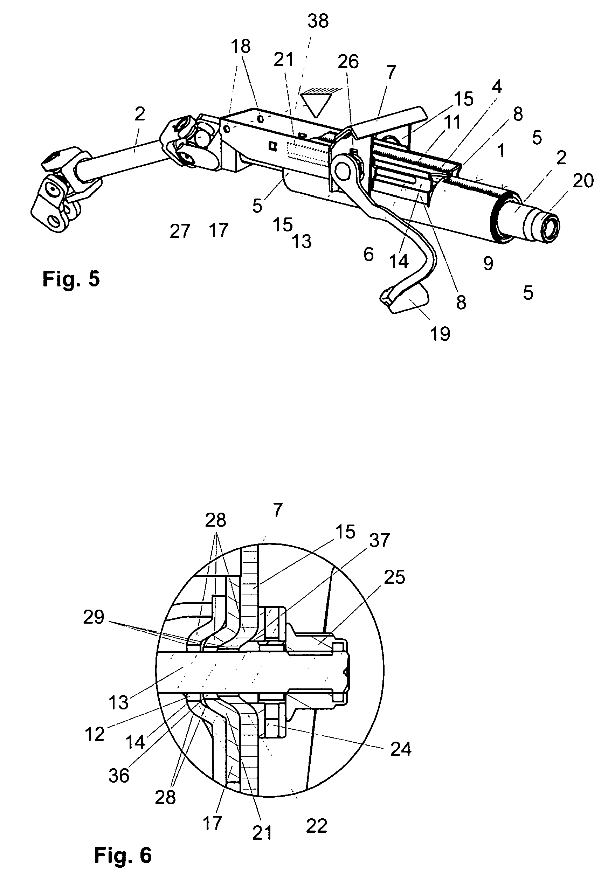

Der Bereich A aus Fig. 2 ist vergrößert noch einmal in Fig. 6 dargestellt. Hier ist besonders gut zu sehen, dass jede der Sicken 14, 21 und 22 jeweils zwei Seitenwände 28 aufweist, welche jeweils mittels eines Sickengrundes 29 miteinander verbunden sind. Der Spannbolzen 13 durchdringt jeweils den Sickengrund 29 der genannten Sicken 14, 21 und 22. Die hierzu notwendige Aussparung bzw. Öffnung ist günstigerweise nur so groß gewählt, dass noch seitliche Ränder des Sickengrundes 29 vorhanden sind. Dies ermöglicht eine höhere Steifigkeit bei der Anlage der Lagerteilsicke 21 an der jeweiligen Lenkspindellagereinheitsicke 14, da dadurch in Richtung der Mittenlängsachse 32 des Spannbolzens 13 Kräfte besonders gut übertragen werden können. Die Seitenwände 28 und hier auch die Sickengründe 29 der jeweils benachbart zueinander liegenden Sicken 14, 21 und 22 liegen flächig aneinander an. Sie sind symmetrisch bezüglich der Mittenlängsachse 32 des Spannbolzens 13 angeordnet und weisen im Sinne eines optimalen aneinander Anliegens eine geometrisch ähnliche Gestalt auf. Im ersten Ausführungsbeispiel gemäß Fig. 1 und 2 weisen die jeweils in die Konsolenteilsicken 22 von außen eingreifenden Klemmstücke 24 entsprechend der Sickenvertiefung ausgeformte Vorsprünge auf, mit denen sie in die Konsolenteilsicken 22 eingreifen. Durch das Hindurchführen des Spannbolzens 13 direkt durch die Sicken 14, 21 und hier auch 22 wirken die Spannkräfte des Spannbolzens 13 direkt auf die genannten Sicken ein, womit eine gleichermaßen einfache wie auch effektive Bauweise und Kraftübertragung realisiert wird.

Mit Vorteil ist die Durchführöffnung 12 bzw. das diese bildende Langloch in der Lenkspindellagereinheit 1 breiter als der Durchmesser des Lochs 36 im Lagerteil 17. Mit Vorteil ist der Durchmesser des Lochs 37 im Konsolenteil 7 kleiner als der Durchmesser des Lochs 36 im Lagerteil 17. Auf diese Weise kann der Verschleiß gemindert werden. Es ist auch denkbar und möglich zur Darstellung einer größeren Verstelllänge, das Loch 36 als Langloch auszubilden. Dann wäre die Breite des Langlochs anstelle des Durchmessers des Lochs 36 als Maß für die o.g. Vergleiche anzusetzen.

Allgemein ist darauf hinzuweisen, dass durch die erfindungsgemäße Konstruktion eine sehr kompakte Bauweise möglich ist, indem der Abstand zwischen dem Spannbolzen 13 und der Lenkspindel 2 sehr gering gehalten werden kann. Dies ist bevorzugt durch eine einwandige Ausführung ermöglicht, bei der die Lenkspindellagereinheit 1 durch nur eine einzige umfänglich Wand gebildet wird, abgesehen von etwa möglichen Anbauteilen, die für weitere Funktionen noch angebracht sein können. Auf diese Weise sind zwischen dem Spannbolzen 13 und der Lenkspindel 2 keine Wände, die entsprechende Wandstärken besitzen und einen erhöhte Mindestabstand zwischen Lenkspindel 2 und Spannbolzen 13 fordern, vorhanden. Die erfindungsgemäße Lenkspindellagereinheit 1 und die Fertigungstechnologie in Halbschalentechnologie ermöglicht diese Bauweise in einfacher Weise.

Im ersten Ausführungsbeispiel weisen die Lenkspindellagereinheitsicken 14 als Durchführöffnungen 12 jeweils ein Langloch auf, durch die der Spannbolzen 13 hindurchgeführt ist. Durch diese in Längsrichtung 31 der Lenkspindel 2 längserstreckten Langlöcher ist es möglich, die Lenkspindellagereinheit 1 in den Längsrichtungen 31 relativ zum Konsolenteil 7 zu verstellen.

Die Lagerteilsicken 21 und die Konsolenteilsicken 22 müssen nicht längserstreckt ausgebildet sein. Durch die Längserstreckung des Lagerteils 17 über seine Länge 30 und die in Längsrichtung 31 vom Spannbolzen 13 entfernt realisierte Anordnung der Lagerteilbefestigung 18 wird eine sehr verwindungssteife und spielarme Lagerung der Lenkspindellagereinheit 1 erreicht. Die Verwindungssteifigkeit der Konstruktion kann aber noch weiter erhöht werden, indem man, wie im ersten Ausführungsbeispiel realisiert, auch die Lagerteilsicken 21 längserstreckt ausführt. Hierdurch wird der Eingriff der Lagerteilsicken 21 in die Lenkspindellagereinheitsicken 14 in Längsrichtung 31 deutlich verlängert, was die Verwindungssteifigkeit der Gesamtkonstruktion weiter erhöht.

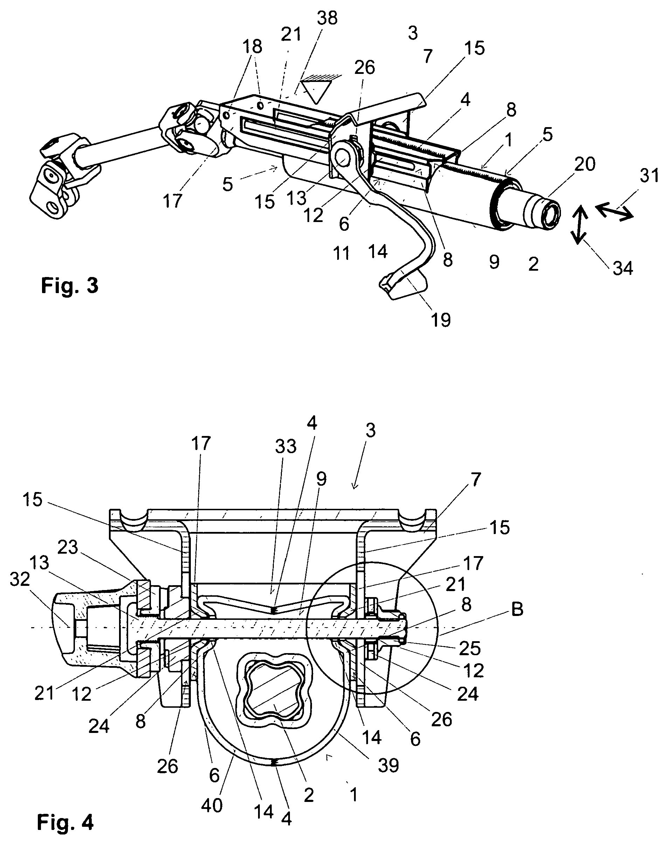

Bevor nun auf das Ausführungsbeispiel gemäß der Fig. 3 und 4 eingegangen wird, ist darauf hinzuweisen, dass in allen gezeigten Ausführungsbeispielen die jeweiligen Sickenanordnungen zweiseitig, also an beiden Seitenwangen 15 des Konsolenteils 7 realisiert sind. Dies ist im Sinne einer spielarmen steifen Konstruktion günstig, aber nicht zwingend notwendig. Es wäre auch denkbar, die entsprechenden Sickenanordnungen im Bereich nur einer der Seitenwangen 15 zu realisieren.

Im Ausführungsbeispiel gemäß Fig. 3 und 4 ist zusätzlich zur Längenverstellbarkeit der Lenksäule 3 in Längsrichtungen 31 noch eine Höhenverstellbarkeit dieser Lenksäule 3 bzw. deren Lenkspindel 2 in den Höhenrichtungen 34 vorgesehen. Hierzu ist in diesem Ausführungsbeispiel in den beiden Seitenwangen 15 des Konsolenteils 7 jeweils ein vertikal verlaufendes Langloch 26 angeordnet, in dem der Spannbolzen 13 längsverschieblich angeordnet ist. Höhen- wie auch Längenverstellung sind allerdings nur dann möglich, wenn die Feststelleinrichtung sich im geöffneten Zustand befindet. Im geschlossenen Zustand der Feststelleinrichtung sind diese Verstellmöglichkeiten zumindest bei beim normalen Betrieb auftretenden Kräften nicht gegeben.

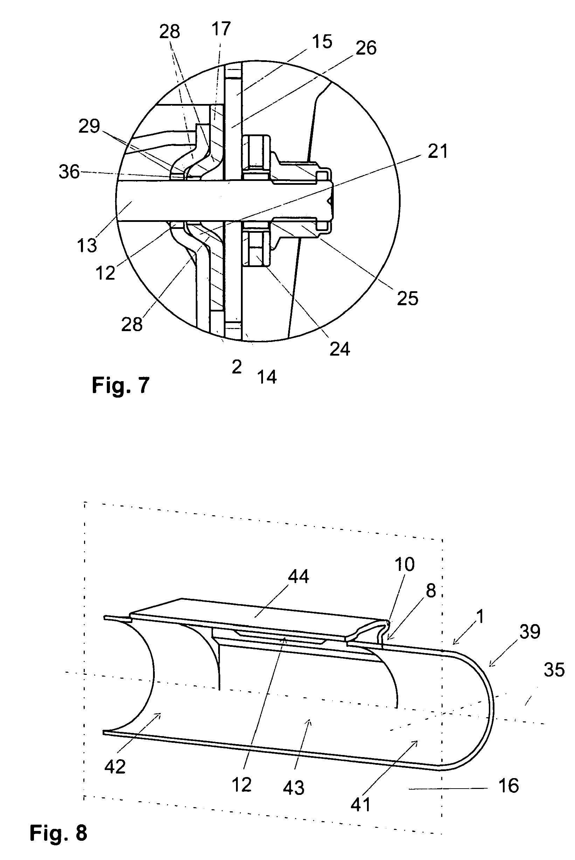

Um auch die Höhenverstellbarkeit in Höhenrichtungen 34 realisieren zu können, weist im Ausführungsbeispiel gemäß der Fig. 3 und 4 die Lagerteilbefestigung 18 des Lagerteils 17 ein Schwenkgelenk auf. Das Lagerteil 17 kann um dieses Schwenkgelenk der Lagerteilbefestigung 18 zusammen mit der Lenkspindellagereinheit 1 um eine Schwenkachse 38 verschwenkt werden, wenn eine Höhenverstellung durchgeführt wird. Ein weiterer Unterschied zum ersten Ausführungsbeispiel besteht darin, dass bei dieser Variante eine Konsolenteilsicke an den beiden Seitenwangen 15 entfällt. In den Seitenwangen 15 sind beidseitig die genannten Langlöcher 26 vorgesehen. In diesem Ausführungsbeispiel weisen die Klemmstücke 24 entsprechend auch keine Nasen auf, mit denen sie in die Sicken eingreifen würden. Trotzdem ist vorgesehen, dass die Lagerteilsicken 21 in den Lenkspindellagereinheitsicken 14 anliegen und der Spannbolzen 13 durch diese Sicken hindurchtritt. All dies ist in Fig. 7 noch einmal vergrößert gezeigt, indem in dieser Figur der Ausschnitt B aus Fig. 4 herausgezeichnet ist. Bis auf die bereits genannten Unterschiede gilt, soweit anwendbar, das zur Fig. 6 Geschilderte.

Abgesehen von den genannten Unterschieden ist das Ausführungsbeispiel gemäß der Fig. 3 und 4 im Wesentlichen so wie das erste Ausführungsbeispiel ausgeführt, sodass sich zusätzliche Erläuterungen hierzu erübrigen.

Generell ist darauf hinzuweisen, dass die Lenkspindel 2 zumindest zweimal an zwei distanziert zueinander angeordneten Stellen der Lenkspindellagereinheit 1, hier in den umfangsgeschlossenen Bereichen 5 der Lenkspindellagereinheit 1 mittels hier nicht explizit eingezeichneten, aber an sich bekannten Lagern drehbar gelagert ist. In der in Fig. 5 gezeigten, abgewandelten Ausführungsform des Ausführungsbeispiels gemäß der Fig. 3 und 4 ist ein Lenkspindellager 27 am motorseitigen Ende des Lagerteils 17 vorgesehen. Ansonsten entspricht dieses Ausführungsbeispiel gemäß Fig. 5 der Variante gemäß Fig. 3 und 4. Es ist auch denkbar und möglich, dieses zusätzliche Lenkspindellager 27 direkt an der hier nicht gezeigten Fahrzeugkarosserie zu befestigen oder in ein hier nicht gezeigtes Getriebe für eine Hilfskraftunterstützung der Lenkbewegung zu integrieren.

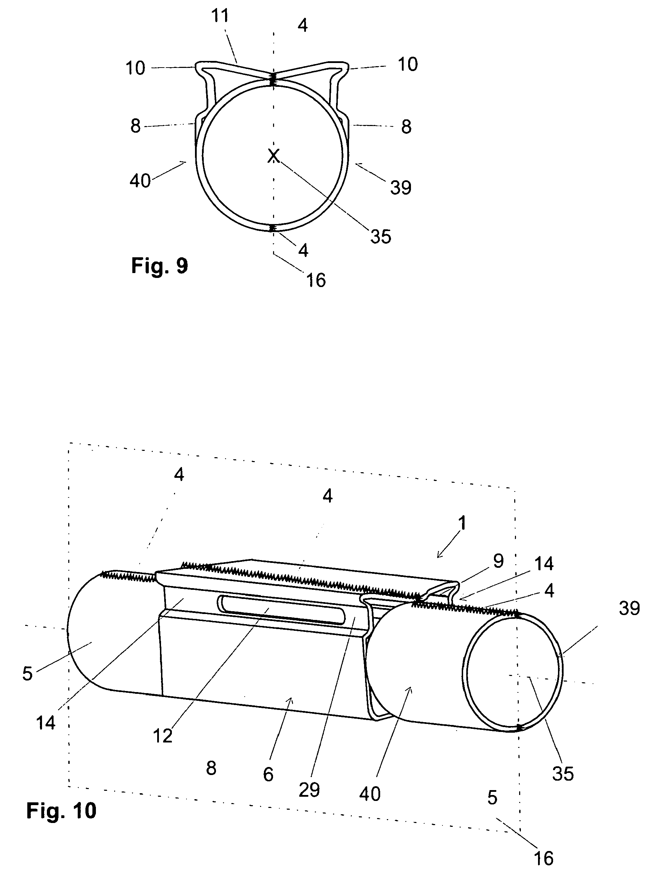

Figuren 9 und 10 zeigen nun separat, also losgelöst von der restlichen Lenksäule 3, die erfindungsgemäße Lenkspindellagereinheit 1, wie sie in den Ausführungsbeispielen der Lenksäule 3 gemäß der Fig. 1 bis 5, aber auch in anderen erfindungsgemäßen Varianten eingebaut werden kann. Die Lenkspindellagereinheit wird im Beispiel durch zwei spiegelsymmetrische Halbschalen bzw. Teilschalen 39, 40 gebildet, die entlang dem Fügebereich 4 miteinander verbunden sind.

Wie bereits ausgeführt, ist es ein Grundgedanke der Erfindung die einzelnen Halbschalen bzw. Teilschalen 39, 40 der Lenkspindellagereinheit zunächst separat voneinander zu fertigen und dann miteinander zu verbinden. Hierdurch ist es sehr einfach, eine besonders stabile und verbindungssteife Lenkspindellagereinheit 1 zur Verfügung zu stellen.

In Fig. 8 ist eine Halbschale bzw. Teilschale 39 veranschaulicht, die jeweils einen Abschnitt 41 eines ersten umfangsgeschlossenen Bereiches 5 und einen Abschnitt 42 eines zweiten umfangsgeschlossenen Bereiches 5, sowie einen Abschnitt 43 eines Befestigungsbereiches 6 umfasst. Im Abschnitt 43 des Befestigungsbereiches 6 ist ein Befestigungssteg 8 ausgebildet. Im Endbereich 10 des Befestigungssteg 8 ist eine Durchführöffnung 12 angeordnet, die hier - wie bevorzugt - als Langloch ausgebildet ist. Am Endbereich 10 schließt ein Abschnitt 44 des Verbindungsabschnitts 11 an, der bereits in Form eines Schenkels der V-Form des Verbindungsabschnitts 11 der Lenkspindellagereinheit 1 aufweist. Denkbar und möglich ist es jedoch auch, den Verbindungsabschnitt in einer W-Form auszubilden. Die das V, beziehungsweise W bildenden Flächen können dabei auch bogenförmig ausgebildet sein.

Zur Erleichterung der Verbindung zwischen den Halbschalen bzw. Teilschalen 39, 40 können zusätzliche Formelemente vorgesehen sein, mit denen die Bauteile, vor dem Fügen, zueinander ausgerichtet positioniert werden können. Entlang dieser Formelemente können die Bauteile in einer Art Spielpassung oder einer leichten Presspassung vorpositioniert werden. Im folgenden Verfahrensschritt werden dann die Bauteile miteinander verbunden, beispielsweise durch Schweißen, bevorzugt Laserschweißen.

Im Sinne einer möglichst kostengünstigen Ausführung ist bevorzugt vorgesehen, dass, wie im gezeigten Ausführungsbeispiel gemäß der Fig. 8 bis 10 auch realisiert, die Lenkspindellagereinheit 1 überall einwandig ausgebildet ist.

Zum Zusammenschweißen der einzelnen Bauteile 5 und 6 können klassische Schweißverfahren genau so wie bei entsprechender Formgebung das Orbitalreibschweißen oder das Laserschweißen eingesetzt werden. Insbesondere ist es mit der Halbschalentechnologie besonders einfach möglich, den umfangsgeschlossenen Bereich 5 so auszubilden, dass das Lager zur Lagerung der Lenkspindel 2 direkt eingepresst werden kann zur Darstellung der Lenksäule 1.

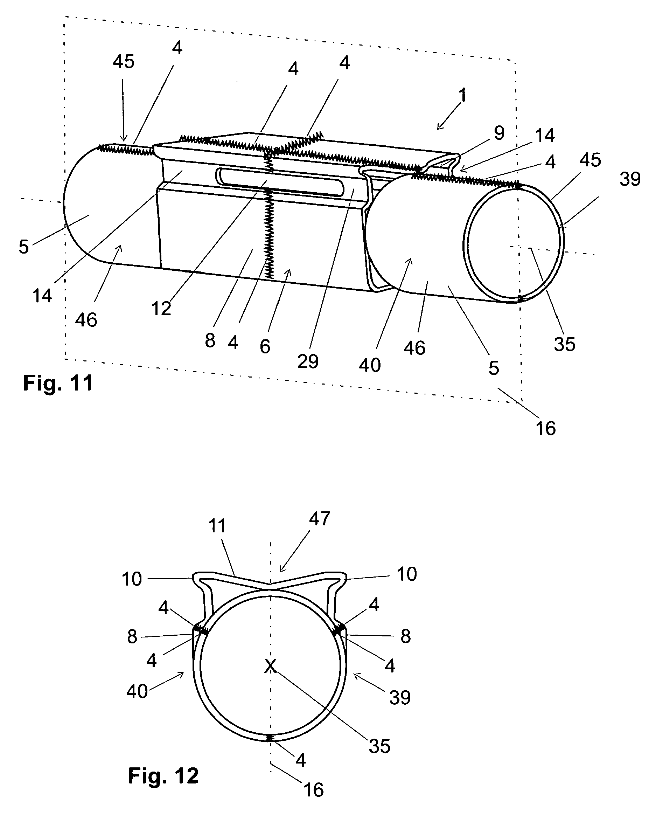

In Fig. 11 ist eine weitere Ausführungsform der Lenkspindellagereinheit veranschaulicht. Die Lenkspindellagereinheit 1 ist hier aus zwei Halbschalen bzw. Teilschalen 39, 40 dargestellt. Die Lenkspindellagereinheit 1 ist durch Zusammenfügen der Halbschalen bzw. Teilschalen 39, 40 entlang der Längsachse 35 der Lenkspindellagereinheit 1, entlang der die Lenkspindel 2 drehbar lagerbar ist, gebildet. Jede der Halbschalen bzw. Teilschalen 39, 40 ist in der erläuterten Halbschalentechnologie aus den Teilhalbschalen 45 und 46 gefertigt. Die Halbschalen bzw. Teilschalen 39, 40 sind entlang der Längsachse 35 ausgerichtet angeordnet und in den Fügebereichen 4 miteinander verbunden. Auch hier kann die Verbindung der Halbschalen bzw. Teilschalen 39, 40 durch Schweißen erfolgen. Prinzipiell ist die Reihenfolge der Fügeoperationen allerdings unerheblich. Es ist denkbar und möglich zuerst die Teilhalbschalen 45, 46 zu Halbschalen bzw. Teilschalen 39, 40 miteinander zu verbinden und dann die Halbschalen bzw. Teilschalen 39, 40 miteinander zu verbinden. Alternativ können aber auch zuerst jeweils die Teilhalbschalen 45 und 45 bzw. die Teilhalbschalen 46 und 46, die jeweils auf einer Seite der Symmetrieebene angeordnet sind, miteinander verbunden werden und anschließend die beiden so gebildeten Bauteile als Halbschalen bzw. Teilschalen 39, 40 miteinander verbunden werden.

Wenn in der vorgängigen Beschreibung als Werkstoff Blech genannt ist, so ist festzustellen, dass die Bauteile oder die Zwischenformen beispielsweise aus Stahlblech, Aluminiumblech, Magnesiumblech aber auch aus Kohlenstofffaser-Verbundwerkstoffen oder anderen Verbundwerkstoffen gefertigt sein können. Anstelle von Blechen können auch Gussteile als Vorform- oder Fertigteile eingesetzt werden. Es ist auch denkbar und möglich einen Mix aus verschiedenen Werkstoffen und verschiedenen Herstellmethoden für die Vorformteile zur Darstellung der Lenkspindellagereinheit einzusetzen. Der Begriff des Blechs, ist also entsprechend weit im Sinne einer Wandung bzw. eines Mantels auszulegen und keinesfalls auf metallische bzw. rein metallische Bleche beschränkt.

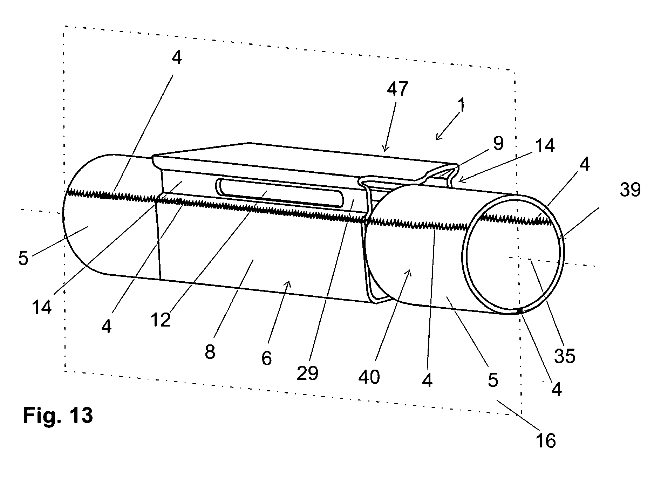

In dem Ausführungsbeispiel gemäß der Fig. 12 und 13 ist eine Ausführungsform mit einer Lenkspindellagereinheit 1 gezeigt, welche aus insgesamt drei Halbschalen bzw. Teilschalen 39, 40 und 47 aufgebaut ist. Diese drei Halbschalen bzw. Teilschalen 39, 40 und 47 sind auch in diesem Ausführungsbeispiel mittels Schweißen zusammengefügt und weisen jeweils zumindest einen Abschnitt des Befestigungsbereichs 6 und zumindest einen Abschnitt des zumindest einen umfangsgeschlossenen Bereichs 5 auf. Dieses Ausführungsbeispiel dient auch dazu, noch einmal zu verdeutlichen, dass der Begriff der Halbschale nicht bedeutet, dass es sich um genau zwei Halbschalen bzw. Teilschalen 39, 40, 47 handeln muss. Der Begriff der Halbschale legt auch nicht zwingend fest, dass die Halb- bzw. Teilschalen 39, 40, 47 gleich groß bzw. achsensymmetrisch oder spiegelsymmetrisch ausgeführt sein müssen. Die Halbschalen bzw. Teilschalen 39, 40 und 47 können unterschiedlich groß und untereinander unsymmetrisch ausgeführt sein. Ihre Anzahl ist nicht auf zwei beschränkt.

Soweit anwendbar sind alle in den einzelnen Ausführungsformen gezeigten Merkmale untereinander frei kombinierbar ohne den Bereich der Erfindung zu verlassen.

**Legende**

| | | | |
|---|---|---|---|
| zu den Hinweisziffern: | | | |
| 1 | Lenkspindellagereinheit | 25 | Spannmutter |
| 2 | Lenkspindel | 26 | Langloch |
| 3 | Lenksäule | 27 | Lenkspindellager |
| 4 | Fügebereich | 28 | Seitenwand |
| 5 | umfangsgeschlossener Bereich 35 | 29 | Sickengrund |
| 6 | Befestigungsbereich | 30 | Länge |
| 7 | Konsolenteil | 31 | Längsrichtungen |
| 8 | Befestigungssteg | 32 | Mittenlängsachse |
| 9 | Öffnung | 33 | Bereich |
| 10 | Endbereich | 34 | Höhenrichtungen |
| 11 | Verbindungsabschnitt | 35 | Längsachse |
| 12 | Durchführöffnung | 36 | Loch |
| 13 | Spannbolzen | 37 | Loch |
| 14 | Lenkspindellagereinheitssicke | 38 | Schwenkachse |
| 15 | Seitenwange | 39 | Halbschale |
| 16 | Symmetrieebene | 40 | Halbschale |
| 17 | Lagerteil | 41 | Abschnitt |
| 18 | Lagerteilbefestigung | 42 | Abschnitt |
| 19 | Betätigungshebel | 43 | Abschnitt |
| 20 | Lenkradanschluss | 44 | Abschnitt |
| 21 | Lagerteilsicke | 45 | Teilhalbschale |
| 22 | Konsolenteilsicke | 46 | Teilhalbschale |
| 23 | Nockenplatte | 47 | Halbschale |
| 24 | Klemmstück | | |

## Patentansprüche

1. Lenkspindellagereinheit (1) zur drehbaren Lagerung einer Lenkspindel (2) einer Lenksäule (3) für ein Kraftfahrzeug, wobei die Lenkspindellagereinheit (1) zumindest einen umfangsgeschlossenen Bereich (5) zur Aufnahme zumindest eines Lagers zur drehbaren Lagerung der Lenkspindel (2) und zumindest einen Befestigungsbereich (6) zur Befestigung der Lenkspindellagereinheit (1) an einem Konsolenteil (7) der Lenksäule (3) aufweist, wobei im Befestigungsbereich (6) zumindest eine Durchführöffnung (12) zum Hindurchführen eines Spannbolzens (13) der Lenksäule (3) angeordnet ist, und die Lenkspindellagereinheit (1) aus zumindest zwei Halbschalen (39, 40, 47), die jeweils zumindest einen Abschnitt des Befestigungsbereichs (6) und zumindest einen Abschnitt des zumindest einen umfangsgeschlossenen Bereichs (5) aufweisen, durch Zusammenfügen gebildet ist, **dadurch gekennzeichnet, dass** die Lenkspindellagereinheit (1) zumindest zwei umfangsgeschlossene Bereiche (5) zur Aufnahme jeweils zumindest eines Lagers zur drehbaren Lagerung der Lenkspindel (2) aufweist und der Befestigungsbereich (6) zwischen den umfangsgeschlossenen Bereichen (5) angeordnet ist.

2. Lenkspindellagereinheit nach Anspruch 1, **dadurch gekennzeichnet, dass** die Halbschalen (39, 40, 47) in einer Symmetrieebene (16), die durch eine Längsachse (35) der Lenkspindellagereinheit (1) verläuft, zusammengefügt sind.

3. Lenkspindellagereinheit nach einem der vorhergehenden Ansprüche, **dadurch gekennzeichnet, dass** die Lenkspindellagereinheit (1) durch weitere separate Bauteile, die mit den zusammengefügten Halbschalen (39,40, 47) der Lenkspindellagereinheit (1) verbunden sind, gebildet ist.

4. Lenkspindellagereinheit (1) nach einem der vorhergehenden Ansprüche , **dadurch gekennzeichnet, dass** die Lenkspindellagereinheit (1) im Befestigungsbereich (6) zumindest bereichsweise umfangsgeschlossen ausgebildet ist.

5. Lenkspindellagereinheit (1) nach einem der vorhergehenden Ansprüche , **dadurch gekennzeichnet, dass** die Lenkspindellagereinheit (1) im Befestigungsbereich (6) und/oder im umfangsgeschlossenen Bereich (5) und/oder überall einwandig ausgebildet ist.

6. Lenkspindellagereinheit (1) nach einem der vorhergehenden Ansprüche, **dadurch gekennzeichnet, dass** der Befestigungsbereich (6) zumindest zwei voneinander beabstandete Befestigungsstege (8) mit jeweils einem Endbereich (10) aufweist, wobei in den Endbereichen (10) der Befestigungsstege (8) jeweils eine der Durchführöffnungen (12) angeordnet ist und die Endbereiche (10) mittels eines Verbindungsabschnitts (11) miteinander verbunden sind.

7. Lenkspindellagereinheit (1) nach einem der vorhergehenden Ansprüche, **dadurch gekennzeichnet, dass** zumindest eine der Halbschalen (39, 40, 47), in einer Längsrichtung entlang einer Längsachse (35) der Lenkspindellagereinheit (1) gesehen, durch Zusammenfügen von zumindest zwei Teilhalbschalen (45, 46), mehrteilig aufgebaut ist.

8. Lenksäule (3) für ein Kraftfahrzeug mit einem, zur Befestigung der Lenksäule (3) an einer Karosserie des Kraftfahrzeugs vorgesehenen Konsolenteil (7), welches zumindest zwei Seitenwangen (15) aufweist, **dadurch gekennzeichnet, dass** eine Lenkspindellagereinheit (1) nach Anspruch 6 mit ihrem Befestigungsbereich (6) zwischen den Seitenwangen (15) angeordnet und mittels der Befestigungsstege (8) an den Seitenwangen (15) gehalten ist.

9. Verfahren zur Herstellung einer Lenkspindellagereinheit (1) nach einem der Ansprüche 1 bis 7, **dadurch gekennzeichnet, dass** in einem ersten Verfahrensschritt zumindest zwei Halbschalen (39, 40, 47), die jeweils zumindest einen Abschnitt des Befestigungsbereichs (6) und jeweils zumindest einen Abschnitt des zumindest einen umfangsgeschlossenen Bereichs (5) aufweisen, gefertigt werden und diese Halbschalen (39, 40, 47) in einem folgenden Verfahrensschritt zur Bildung der Lenkspindellagereinheit (1) miteinander verbunden werden.

10. Verfahren zur Herstellung einer Lenkspindellagereinheit (1) nach Anspruch 9, **dadurch gekennzeichnet, dass** die Halbschalen (39, 40) spiegelgleich geformt werden.

## Claims

1. Steering shaft bearing unit (1) for the rotatable support of a steering shaft (2) of a steering column (3) for a motor vehicle, wherein the steering shaft bearing unit (1) comprises at least one circumferentially closed region (5) for receiving at least one bearing for the rotatable support of the steering shaft (2) and at least one securement region (6) for securing the steering shaft bearing unit (1) on a bracket part (7) of the steering column (3), wherein in the securement region (6) at least one through-opening (12) is disposed for guiding through a clamp bolt (13) of the steering column (3), and the steering shaft bearing unit (1) is formed of at least two half-shells (39, 40, 47) by joining, each of which comprises at least one section of the securement region (6) and at least one section of the at least one circumferentially closed region (5), **characterised in that** the steering shaft bearing unit (1) comprises at least two circumferentially closed regions (5) each for receiving at least one bearing for the rotatable support of the steering shaft (2), and the securement region (6) is disposed between the circumferentially closed regions (5).

2. Steering shaft bearing unit according to claim 1, **characterised in that** the half-shells (39, 40, 47) are joined, in a plane of symmetry (16) extending through a longitudinal axis (35) of the steering shaft bearing unit (1).

3. Steering shaft bearing unit according to one of the preceding claims, **characterised in that** the steering shaft bearing unit (1) is formed by further separate structural parts connected with the joined half-shells (39, 40, 47) of the steering shaft bearing unit (1).

4. Steering shaft bearing unit (1) according to one of the preceding claims, **characterised in that** the steering shaft bearing unit (1) is formed at least regionally circumferentially closed in the securement region (6).

5. Steering shaft bearing unit (1) according to one of the preceding claims, **characterised in that** the steering shaft bearing unit (1) in the securement region (6) and/or in the circumferentially closed region (5) and/or entirely is formed as a single wall.

6. Steering shaft bearing unit (1) according to one of the preceding claims, **characterised in that** the securement region (6) comprises at least two securement webs (8), spaced apart from one another, each with an end region (10), in the end regions (10) of each of the securement webs (8) one of the through-openings (12) being disposed and the end regions (10) being connected with one another by means of a connection section (11).

7. Steering shaft bearing unit (1) according to one of the preceding claims, **characterised in that** at least one of the half-shells (39, 40, 47), viewed in a longitudinal direction along a longitudinal axis (35) of the steering shaft bearing unit (1), is composed of a plurality of parts by joining at least two subhalf-shells (45, 46).

8. Steering column (3) for a motor vehicle with a bracket part (7) provided for securing the steering column (3) on a body of the motor vehicle, which bracket part comprises at least two side jaws (15), **characterised in that** a steering shaft bearing unit (1) according to claim 6 is disposed with its securement region (6) between the side jaws (15) and retained on the side jaws (15) by means of the securement webs (8).

9. Method for the production of a steering shaft bearing unit (1) according to one of claims 1 to 7, **characterised in that** in a first method step at least two half-shells (39, 40, 47), each of which comprises at least one section of the securement region (6) and at least one section of the at least one circumferentially closed region (5), are fabricated, and these half-shells (39, 40, 47) are connected with one another in a subsequent method step for the formation of the steering shaft bearing unit (1).

10. Method for the production of a steering shaft bearing unit (1) according to claim 9, **characterised in that** the half-shells (39, 40) are formed mirror-symmetrically.

## Revendications

1. Unité palier d'arbre de direction (1) destinée au logement rotatif d'un arbre de direction (2) d'une colonne de direction (3) sur un véhicule à moteur, laquelle unité palier d'arbre de direction (1) présente au moins une zone (5) fermée sur sa périphérie pour recevoir au moins un palier destiné au logement rotatif de l'arbre de direction (2) et au moins une zone de fixation (6) pour la fixation de l'unité palier d'arbre de direction (1) sur une partie console (7) de la colonne de direction (3), au moins une ouverture de passage (12) étant ménagée dans la zone de fixation (6) pour la traversée d'un boulon de serrage (13) de la colonne de direction (3) et l'unité palier d'arbre de direction (1) étant formée par assemblage d'au moins deux demi-coques (39, 40, 47) qui présentent chacune au moins une partie de la zone de fixation (6) et au moins une partie d'au moins une partie de la zone (5) fermée sur sa périphérie, ces deux demi-coques étant assemblées de préférence par assemblage, **caractérisée en ce que** l'unité palier d'arbre de direction (1) présente au moins deux zones (5) fermées sur leur périphérie pour recevoir au moins un palier destiné au logement rotatif de l'arbre de direction (2) et la zone de fixation (6) est disposée entre les zones (5) fermées sur leur périphérie.

2. Unité palier d'arbre de direction selon la revendication 1, **caractérisée en ce que** les demi-coques (39, 40, 47) sont assemblées sur un plan symétrique (16) passant par un axe longitudinal (35) de l'unité palier d'arbre de direction (1).

3. Unité palier d'arbre de direction selon l'une quelconque des revendications précédentes, **caractérisée en ce que** celle-ci est formée par d'autres composants séparés reliés aux demi-coques (39, 40, 47) assemblées de l'unité palier d'arbre de direction (1).

4. Unité palier d'arbre de direction (1) selon l'une quelconque des revendications précédentes, **caractérisée en ce que** celle-ci est ménagée de façon fermée sur sa périphérie, du moins par endroits, dans la zone de fixation (6).

5. Unité palier d'arbre de direction (1) selon l'une quelconque des revendications précédentes, **caractérisée en ce que** celle-ci est à paroi unique dans la zone de fixation (6) et/ou dans la zone (5) fermée sur sa périphérie et/ou partout.

6. Unité palier d'arbre de direction (1) selon l'une quelconque des revendications précédentes, **caractérisée en ce que** la zone de fixation (6) présente au moins deux entretoises de fixation (8) à distance l'une de l'autre comportant chacune une zone d'extrémité (10), l'une des ouvertures de passage (12) étant disposée dans chacune des zones d'extrémité (10) des entretoises de fixation (8) et les zones d'extrémité (10) étant reliées entre elles au moyen d'un tronçon de liaison (11).

7. Unité palier d'arbre de direction (1) selon l'une quelconque des revendications précédentes, **caractérisée en ce qu'**au moins l'une des deux demi-coques (39, 40, 47), vue dans le sens longitudinal le long d'un axe longitudinal (35) de l'unité palier d'arbre de direction (1), comporte plusieurs parties par assemblage d'au moins deux demi-coques (45, 46).

8. Colonne de direction (3) d'un véhicule automobile comportant une partie console (7) prévue pour fixer la colonne de direction (3) sur la carrosserie du véhicule à moteur, laquelle partie console présente au moins deux joues latérales (15), **caractérisée en ce qu'**une unité palier d'arbre de direction (1) selon la revendication 6 est disposée, avec sa zone de fixation (6), entre les joues latérales (15) et maintenue sur les joues latérales (15) au moyen des entretoises de fixation (8).

9. Procédé de fabrication d'une unité palier d'arbre de direction (1) selon l'une quelconque des revendications 1 à 7, **caractérisé en ce que**, dans une première étape du procédé, on fabrique deux demi-coques (39, 40, 47), présentant chacune au moins une partie de la zone de fixation (6) et au moins une partie de la zone (5) fermée sur sa périphérie et ces deux demi-coques (39, 40, 47) sont reliées entre elles dans une étape suivante du procédé pour former l'unité palier d'arbre de direction (1).

10. Procédé de fabrication d'une unité palier d'arbre de direction (1) selon la revendication 9, **caractérisé en ce que** les deux demi-coques (39, 40) sont symétriques.
